# EUROPEAN PATENT SPECIFICATION

(11) **EP 3 491 083 B1**
(45) Date of publication and mention of the grant of the patent: **10.05.2023**
(21) Application number: 17835195.3
(22) Date of filing: 26.07.2017
(51) Int. Cl.: B05D 5/08, G02B 1/18, C09D 5/16, C09D 167/08, C09D 127/18, C09D 171/02

(54) **COMPOSITIONS AND METHODS FOR CREATING FUNCTIONALIZED, ROUGHENED SURFACES AND METHODS OF CREATING REPELLANT SURFACES**
ZUSAMMENSETZUNGEN UND VERFAHREN ZUR HERSTELLUNG FUNKTIONALISIERTER, AUFGERAUTER OBERFLÄCHEN UND VERFAHREN ZUR HERSTELLUNG VON ABWEISENDEN OBERFLÄCHEN
COMPOSITIONS ET PROCÉDÉS POUR CRÉER DES SURFACES RUGUEUSES FONCTIONNALISÉES ET PROCÉDÉS POUR CRÉER DES SURFACES RÉPULSIVES

(30) Priority: 27.07.2016 US 201662367196 P
(43) Date of publication of application: 05.06.2019
(73) Proprietor: Adaptive Surface Technologies, Inc., Cambridge, Massachusetts 02140 (US)
(72) Inventor: KIM, Philseok, Cambridge Massachusetts 02140 (US); PAINK, Gurminder Kaur, Cambridge Massachusetts 02140 (US); D'EON, Jeffrey Elizee, Cambridge Massachusetts 02140 (US); TREMELLING, Grant, Cambridge Massachusetts 02140 (US)
(74) Representative: Appleyard Lees IP LLP
(86) International application number: PCT/US2017/043915
(87) International publication number: WO 2018/022736

(56) References cited:
- WO-A1-90/13149
- WO-A1-2012/115986
- WO-A1-2014/012039
- WO-A1-2015/119943
- WO-A1-2017/062712
- CN-A- 104 046 152
- US-A1- 2010 051 917
- US-A1- 2012 107 581
- US-A1- 2014 290 732
- US-A1- 2015 152 270
- US-A1- 2016 163 411

## Description

### FIELD

The present teachings relate to a method of creating a repellant surface using compositions and methods for first creating a functionalized, roughened surface, which has a non-hierarchical and uniformly textured and roughened surface and an affinity for a lubricating liquid such that an immobilized, stable liquid overlayer of the lubricating liquid is applied on, over and above the functionalized, roughened surface.

### BACKGROUND

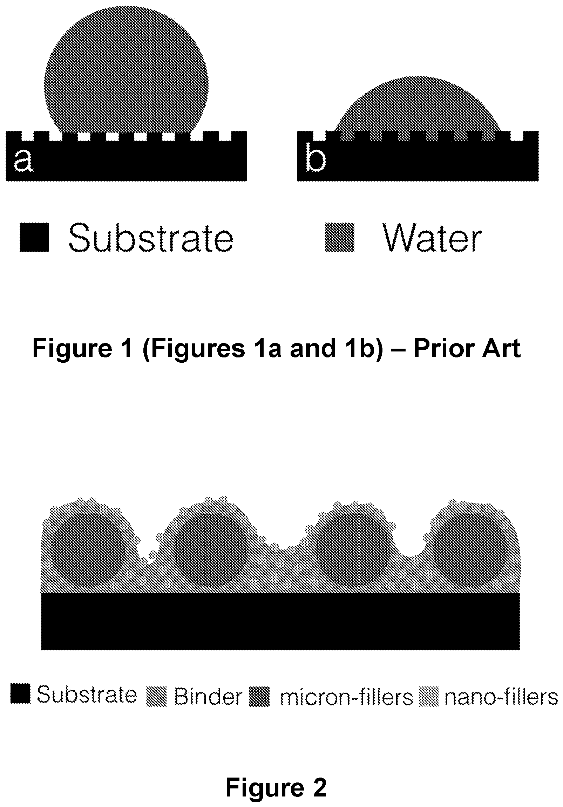

In some applications, it is desirable to have a highly repellent surface that is capable of providing anti-fouling characteristics. Currently, one of the leading technologies capable of providing the desired repellency, is known as superhydrophobic surfaces. Inspired by the "lotus effect," these surfaces provide a certain surface texturing, or porosity, that is capable of trapping small air pockets on the surface when exposed to water. This causes the water to bead into a nearspherical shape, known as the "Cassie-Baxter state," as shown in Figure 1a. These droplets can easily roll off such a surface with minimal efforts. Despite the benefits of such surfaces, the majority of them are fragile and are limited in terms of temperature, pressure and the type of liquids which can be repelled. For example, the underlying air pockets can be filled with water or other fluid(s), due to high pressure, extreme temperatures, low surface tension or other harsh and/or adverse conditions. In fact, the wetted textured surface is more adhesive than a flat untextured surface. This phenomenon, when liquid is trapped within the air pockets is known as the "Wenzel state," as shown in Figure 1b.

To overcome the drawbacks of superhydrophobic surfaces described above, recent approaches to create robust superhydrophobic surfaces have been focused on creating roughened and highly porous surfaces with re-entrant curvatures to promote effective contact line pinning at the asperities of micro/nanotexture and to prevent transition to the "Wenzel state" when the contact line of the liquid further advances into the pores to fill the pores. Although highly sophisticated silicon micromachining techniques can create ideally designed surfaces with one or more re-entrant curvatures (PNAS 105(47) pp 18200-18205, 2008; Science 346(6213), pp. 1096-1100, 2014**),** practically useful approaches typically rely on creating hierarchically textured surfaces where there are more than one length scales of roughness, e.g. creating a nanoscale texture on top of a microscale texture, or creating multi-hierarchical textures.

Slippery liquid infused porous surfaces technology is a groundbreaking invention (U.S. Patent Nos. 9,121,306; 9,121,307; and 9,353,646) to overcome the general drawbacks of superhydrophobic surfaces failing to work due to the transition from the "Cassie-Boxter" state to the "Wenzel state". By filling the pores with a highly repellant liquid or "lubricant," the possibility of attaining Wenzel state is eliminated and a slippery surface with non-fouling characteristics is realized especially when such a lubricant liquid forms a smooth and homogeneous interface over the porous solid surface. A key to attaining a robust SLIPS surface is a method to produce an underlying textured surface that is uniformly textured at nanoscale and non-hierarchically porous surface, as described by Kim et al. (Nano Letters 13(4) pp 1793-1799, 2013**),** provides the capillary forces required to trap and stabilize the repellant liquid overlayer, and perfectly matches the surface chemistry to the liquid lubricant applied.

However, many commercially available superhydrophobic spray products are not ideal for creating ideally smooth SLIPS since they are developed to create more hierarchically porous surfaces to promote the "Cassie-Baxter" state.

Commercially available superhydrophobic spray-on coatings such as Fluorothane^{™} WX2100 (Cytonix Corporation) and NeverWet^{®} (Ross Technology Corporation) fail to provide the necessary uniform and nanoscale texture or porosity required to trap and stabilize the lubricant, presenting an ultrasmooth interface without hierarchy. Superhydrophobic surfaces are most effective when the surface is composed of re-entrant features, or hierarchically-textured structures with surface features of multiple length scales, making it difficult for liquids to enter the pores and achieve Wenzel state. Consequently, these commercially-available sprays attempt to achieve multi-layer texturing typically of micron-sized features covered in sub-micron (nanoscale) features. Practically, this texturing is achieved by combining two different sized fillers or particles into a base matrix prior to spraying or painting the formulation onto the substrate. See, e.g., Figure 2.

In the case of Fluorothane^{™} WX2100, both the micron scale particles and nano scale particles are combined in one solution. When sprayed onto a surface, the micron scale particles create large peaks and valleys that are then conformably covered by the nano scale particles. This one-pot spray formulation cures into a system containing the desired multi-layer hierarchical structure optimized for superhydrophobicity.

NeverWet^{®} brand products use a similar concept but break the formulation into 2 separate parts. First an adhesive base coat containing only micron-sized particles that generate micron-sized roughness is applied. Before the base coat fully sets a second topcoat is applied containing the secondary nano scale particles creating hierarchically textured surface in favor of forming a robust superhydrophobic surface. Fluorothane^{™} WX2100 and NeverWet^{®} are designed to achieve hierarchically-textured surfaces using slightly different techniques. However, surprisingly these products do not create a surface necessarily optimized for creating a robust slippery surface which can maintain a smooth and stable liquid overlayer.

Thus, there is a need to improve the compositions for a scalable formulation that can be sprayed or painted onto a substrate to provide a functionalized, uniformly roughened surface optimized for creating a slippery liquid-infused porous surface such as those disclosed in U.S. Patent Nos. 9,121,306; 9,121,307; and 9,353,646.

WO2014/012039A1 discloses an article having a repellant surface which includes a substrate comprising surface features with re-entrant curvature and an immobilized layer of lubricating liquid wetting over the surface features. The surface features with re-entrant curvature can be designed to provide high repellency even after failure or removal of the immobilized layer of lubricating liquid under certain operating conditions.

### SUMMARY

In light of the foregoing, the present teachings provide methods that can address various deficiencies and/or shortcomings of the state-of-the-art, including those outlined above. The present teachings provide a method of creating a repellant surface, the method comprising:
forming a functionalized, roughened surface on a substrate surface by:
   dispersing fluoropolymer nanoparticles in a solvent comprising a fluorinated binder to form a roughening composition;
   applying the roughening composition to a substrate surface; and
   removing the solvent from the roughening composition on the surface to form a coating comprising a non-hierarchical functionalized, roughened surface;
   wherein the fluoropolymer nanoparticles have a narrow particle size distribution characterized by a standard deviation of 80% or less from a mean particle size of the nanoparticles;
   wherein the fluorinated binder is soluble in the solvent;
   wherein the solids of the composition comprise between 10 volume % to 75 volume % nanoparticles; and
   wherein the coating comprises one or more layers of the fluoropolymer nanoparticles dispersed therein and having fluoropolymer particles exposed at the surface of the coating; and
applying a lubricating liquid to the functionalized, roughened surface, wherein the lubricating liquid, at atmospheric pressure, is immobilized in, on and over the functionalized, roughened surface, without dewetting from the substrate, to form a repellant surface.

Also disclosed are one-pot compositions or formulations that can provide in a single application, a uniformly nanotextured surface which is well-suited for creating a stable slippery liquid surface. The textured surface created by the present teachings can be substantially uniformly-textured or uniformly-textured.

The present teachings extend and improve on the previous slippery liquid-infused porous surface technology by further engineering the base resin or binder (to provide the textured surface) and lubricant of the compositions or system. Previous surface formulations for making a slippery liquid-infused porous surface often failed under specific conditions where certain fouling agents have a high affinity for the base binder and are capable of displacing the lubricant overlayer and/or penetrating through the lubricant layer at defect sites to directly damage the underlying binder layer causing failure. By adjusting the chemistry of the binder, per the present teachings, greater repellency and durability of the coating layer and the liquid can be provided, further optimizing the slippery liquid-infused porous surface system.

Also disclosed is a one-pot composition that can be sprayed to form a film or coating at large scale after drying and/or curing at room temperature in such a way as to provide a uniformly nano-porous surface capable of holding and stabilizing a lubricous liquid within and on top of the porous (textured) surface to form a slippery liquid-infused porous surface. The composition can control the structure of the resultant porous surface as well as the surface chemical properties to allow and enhance one or more of the following desirable and useful properties: 1) minimize pinning points 2) minimize crack formation which favors hierarchical surface texture non-ideal for creating SLIPS, 3) improve cohesive properties of the film (i.e., minimize particles picked up when rubbed), 4) provide increased stability and longevity of the lubricous overlayer, 5) provide stability against more aggressive fouling agents that can displace the lubricant pre-wetted on the textured surface, 6) improve adhesion to substrates, 7) improve mechanical strength of the formed film or coating, 8) improve optical properties, and 9) allow for a method to remove a formed film or coating when needed. Once lubricated, the surface can present a mechanically-robust base coat with a non-stick, lubricous overlayer that can be replenished via re-lubrication, for as long as the base coat remains intact.

More specifically, a composition for creating a functionalized, roughened surface, preferably in a single application, generally includes a solvent, nanoparticles having a narrow particle size distribution, a binder, and an additive. The nanoparticles are dispersed in the solvent; and the binder is soluble in the solvent. The composition can provide a uniformly-textured surface suitable for forming a smooth liquid lubricant overlayer surface when treated with a lubricating liquid. That is, the resulting functionalized roughened surface typically is uniformly-textured, although not necessarily optimized to achieve a robust superhydrophobic surface, and is suitable for forming a slippery liquid-infused porous surface with an appropriate lubricating liquid.

The present teachings involve methods of creating a functionalized, roughened surface, suitable for forming a slippery liquid-infused porous surface with an appropriate lubricating liquid. The method generally includes dispersing nanoparticles having a narrow particle size distribution in a solvent including a binder to form a roughening composition; applying the roughening composition to a surface; and removing the solvent from the roughening composition on the surface and curing the binder, if needed, to form a coating comprising a functionalized, roughened surface.

The foregoing as well as other features and advantages of the present teachings will be more fully understood from the following figures, description, examples, and claims.

### DESCRIPTION OF DRAWINGS

It should be understood that the drawings described below are for illustration purposes only. Like numerals in different figures generally refer to like parts. The drawings are not necessarily to scale, with emphasis generally being placed upon illustrating the principles of the present teachings. The drawings are not intended to limit the scope of the present teachings in any way.
Figure 1 (Prior Art) with parts a and b, referred to herein as Figures 1a and 1b, present schematic diagrams of a side cross-sectional view of: (1a) a textured superhydrophobic surface showing Cassie-Baxter state, and (1b) the same textured surface failing under more harsh conditions and irreversibly becoming Wenzel-state.
Figure 2 is a schematic diagram of a side cross-sectional view of a hierarchical structure obtained by Fluorothane^{™} WX2100 by using a combination of two particles in the presence of a base binder, and NeverWet^{®} by using the first layer creating a microscale texture and the second layer creating a nanoscale texture atop. These hierarchal structures are optimized for superhydrophobicity but fail to achieve an ideal textured surface for SLIPS.

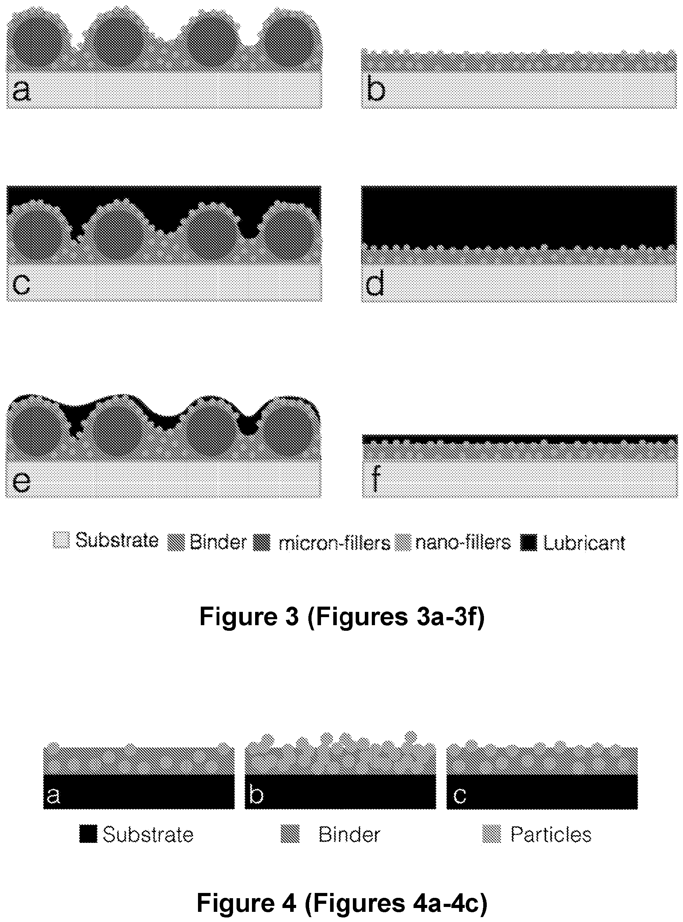

Figure 3, with parts a-f, referred to herein as Figures 3a-3f, present schematic diagrams of a side cross-sectional view of: (a) a hierarchically textured superhydrophobic surface, (b) a uniformly nano-textured superhydrophobic surface, (c) a hierarchically structured surface when infused with lubricant, (d) a uniformly nano-textured surface when infused with lubricant, (e) the above sample after being exposed to high shear rates/environmental wear, and (f) the above sample after being exposed to high shear rates/environmental wear. The experiment outlines how Figure 3f is a preferred choice when providing a slippery liquid-infused porous surface. Kim et al., Nano Letters 13:1793-1799 (2013).
Figure 4, with parts a-c, referred to herein as Figures 4a-4c, present schematic diagrams of a side cross-sectional view of: (a) a coating under-loaded with particles such that the majority of the surface is binder, (b) a coating over-loaded with particles such that the particles are simply resting on the surface and can be brushed off easily, and (c) a good balance between the amount of binder and particles such that the particles are exposed at the surface but still remain trapped inside and/or within the matrix.

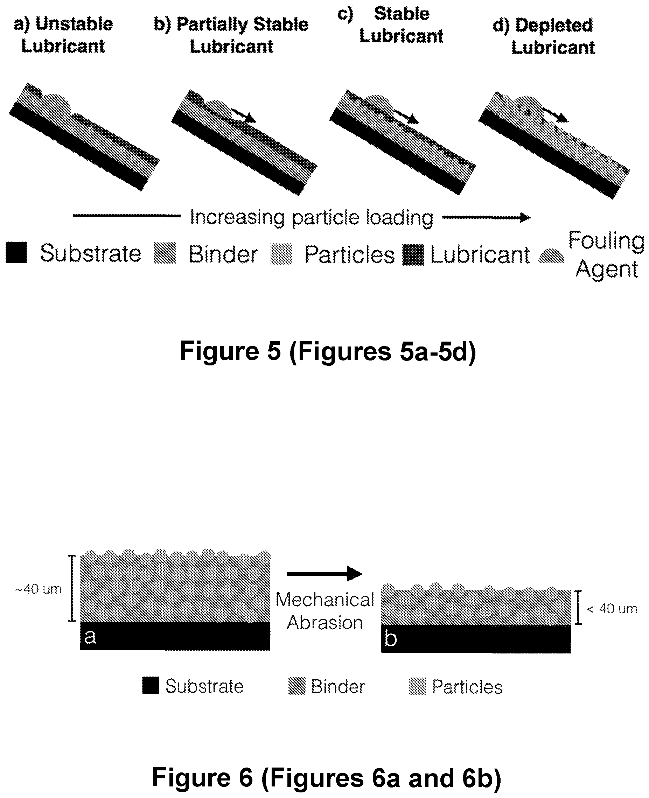

Figure 5, with parts a-d, referred to herein as Figures 5a-5d, present schematic diagrams of a side cross-sectional view of a lubricated surface where: (a) there are insufficient particles in the formulation to create the surface texturing required to immobilize the lubricant, (b) a slightly increased particle loading where the lubricant is partially immobilized and the fouling agent can slide but over time will displace the lubricant, (c) a particle loading such that a stable lubricant layer is present that can completely repel the fouling agent, and (d) an over-loaded system that presents pinning points where the fouling agent can adhere to the particles extruding out of the lubricant layer. Figure 5c depicts a slippery liquid-infused porous surface at a thickness such that only lubricating liquid forms the surface above the functionalized, roughened surface (i.e., a smooth liquid interface is presented to the environment).
Figure 6, with parts a and b, referred to herein as Figures 6a-6b, present schematic diagrams of a side cross-sectional view of an embodiment of a functionalized, roughened surface of the present teachings showing that a bulk coating, which contains particles embedded inside the matrix, can present a new surface containing the desired particles and porosity at the surface after exposing the coating to mechanical abrasion.

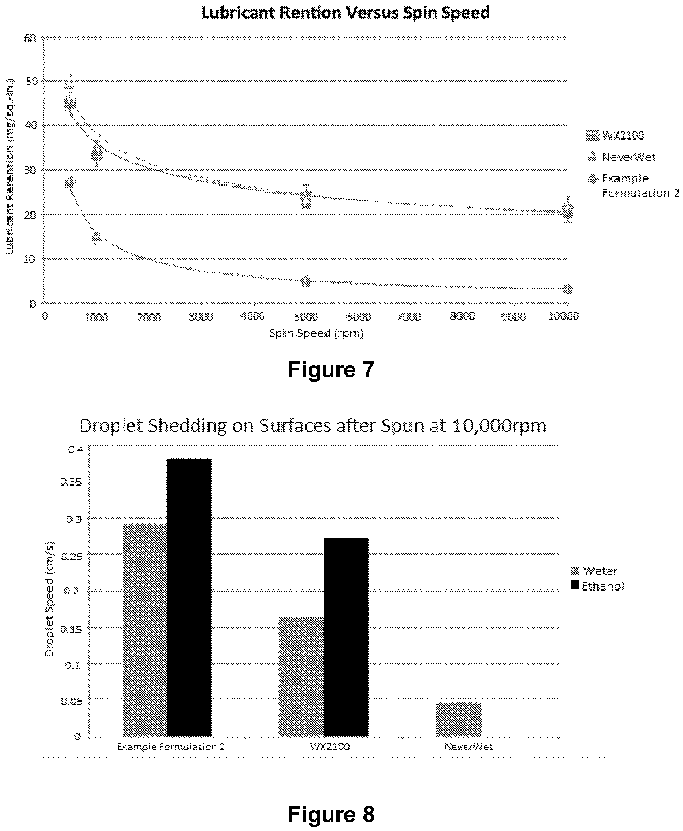

Figure 7 is a graph of lubricant retention versus spin speed, where lubricant retention, by mass, was measured for two commercially-available coatings as well as the formulation of Example 2. The lower lubricant retention confirms the smaller pore size required to optimize a slippery liquid-infused porous surface.
Figure 8 shows the evaluation of film slippery properties via droplet speed on the formulation of Example 2, Fluorothane^{™} WX2100, and NeverWet^{®}, after the samples were spun at 10,000 rpm to remove excess lubricant. The formulation of Example 2 possessed the fastest shedding speed of the three surfaces.

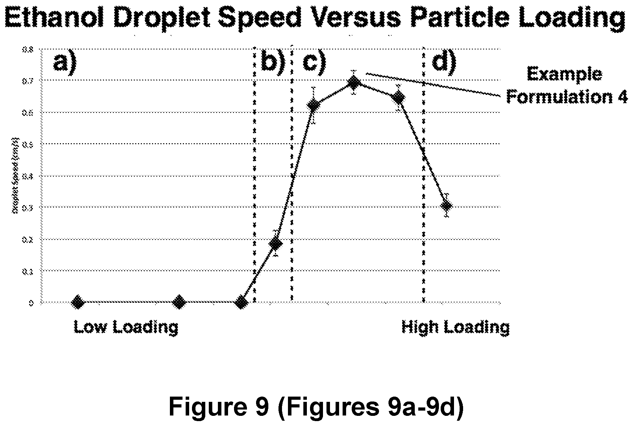

Figure 9 is a graph outlining four regions of a lubricated surface where, (a) the surface has insufficient texturing and the droplet pins to the base matrix, (b) where the droplet can slide but eventually wets the base matrix with time, (c) where the droplet slides freely and does not touch the base matrix, and (d) where the loading is so high that the droplet speed is reduced because the droplet pins to extruding particles. See also Figure 5 and text below related to Figures 5 and 9.

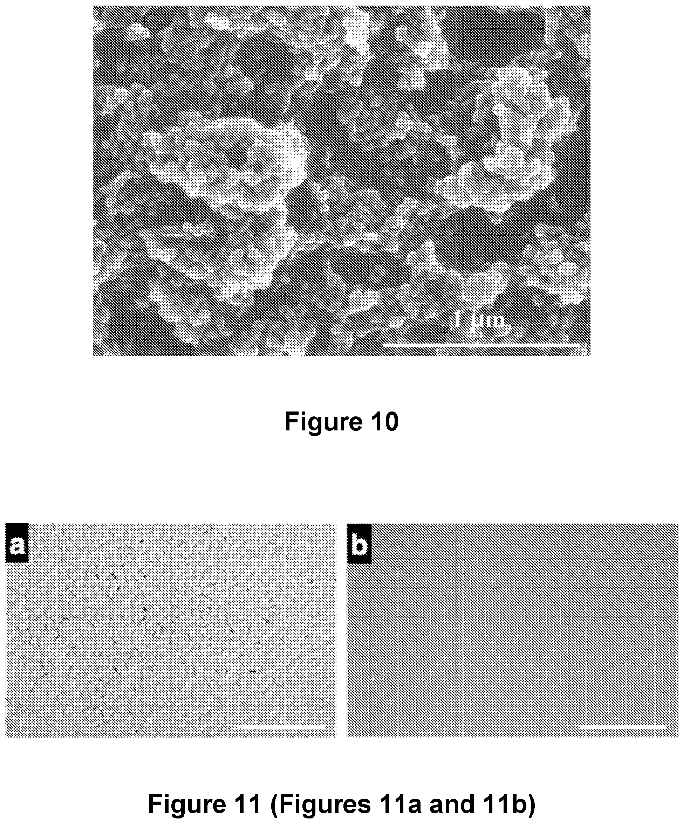

Figure 10 is a scanning electron microscope image of the formulation of Example 1 sprayed on glass prior to lubrication, demonstrating both the porosity as well as the particles (white spots) being exposed at the surface. The surface contains sub-micron sized features that are small enough such that once the surface is infused with lubricant, the features are incapable of protruding out of the liquid overlayer to form point defects.
Figure 11, with parts a and b, referred to herein as Figures 11a-11b, present photographs of: (a) the formulation of Example 1 sprayed on glass containing poly(tetrafluoroethylene-co-hexafluoroproylene) (Viton^{®}, Dupont) as a film forming agent that dried too quickly due to insufficient quantities of Parachlorobenzotrifluoride (Oxsol-100, Rust-Oleum) causing cracking, and (b) the formulation of Example 1 sprayed on glass with no Viton and containing much higher levels of Oxsol-100 to slow the drying process eliminating crack formation.

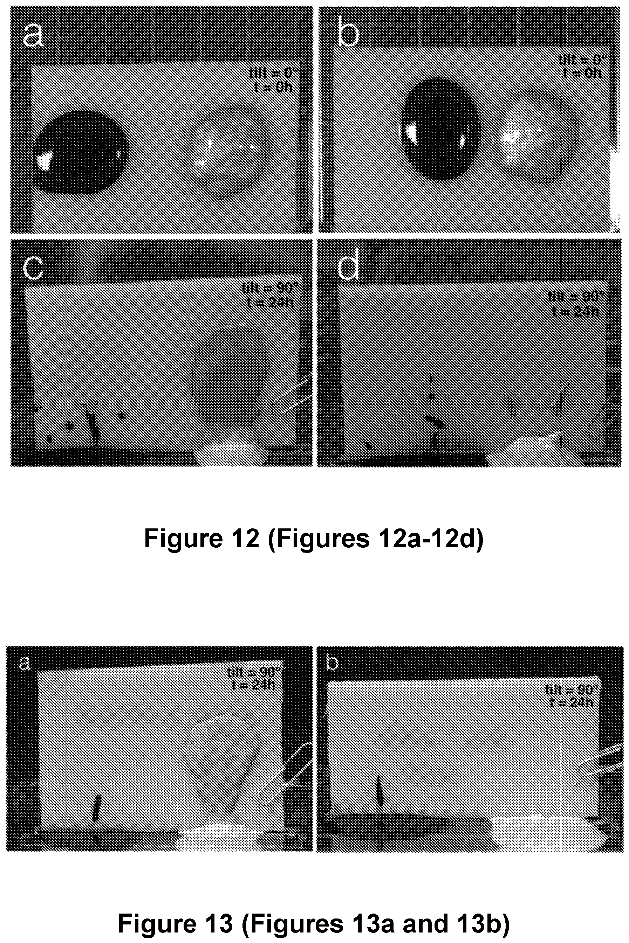

Figure 12, with parts a-d, referred to herein as Figures 12a-12d, present photographs of: (a) the formulation of Example 1 sprayed on high-density polyethylene (HDPE) and lubricated with Krytox^{®} perfluoropolyether (PFPE) oil GPL 100 (Dupont) with a deposit of masterbatch dark blue and silver dye, (b) the formulation of Example 1 sprayed on HDPE with Krytox^{®} PFPE oil GPL 105 with a deposit of dark blue and silver dye, (c) the samples in Figure 13a tilted vertically after 24 hours, demonstrating the inability of the low viscosity GPL 100 to repel the high viscosity silver dye; and (d) the samples in Figure 13b tilted vertically after 24 hours, demonstrating improved performance using GPL 105, a higher viscosity PFPE oil.
Figure 13, with parts a and b, referred to herein as Figures 13a-13b, present photographs of: (a) the formulation of Example 1 sprayed on HDPE and lubricated with GPL 105 (similar to Figure 12d) but excess lubricant was removed by spin coating (more harsh conditions than Figure 12d) and the sample was tilted vertically after 24 hours demonstrating failure; and (b) the formulation of Example 2 sprayed on HDPE and lubricated under the same conditions as in Figure 13a demonstrating that improved performance can be achieved by selecting an appropriate base resin.

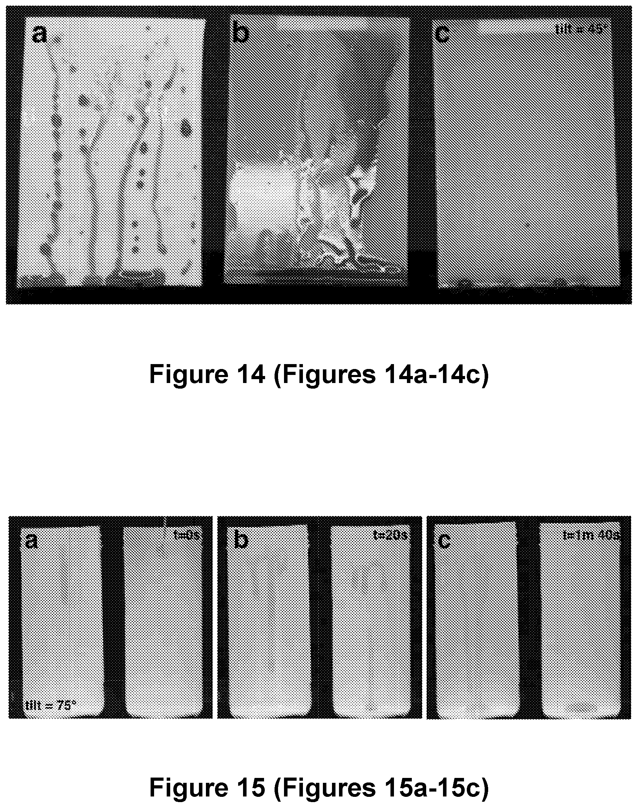

Figure 14, with parts a-c, referred to herein as Figures 14a-14c, present photographs of: (a) a typical non-stick perfluoropolyether (Teflon^{®}, Dupont) sample, (b) standard superhydrophobic coating on glass, and (c) the formulation of Example 1 lubricated with GPL 100, where all samples were exposed to blue-dyed water, yellow-dyed silicone oil and red-dyed hexadecane. The samples were tilted at 45° and only (c) was able to repel all three liquids demonstrating the non-stick and omni-phobic characteristics of the coating.

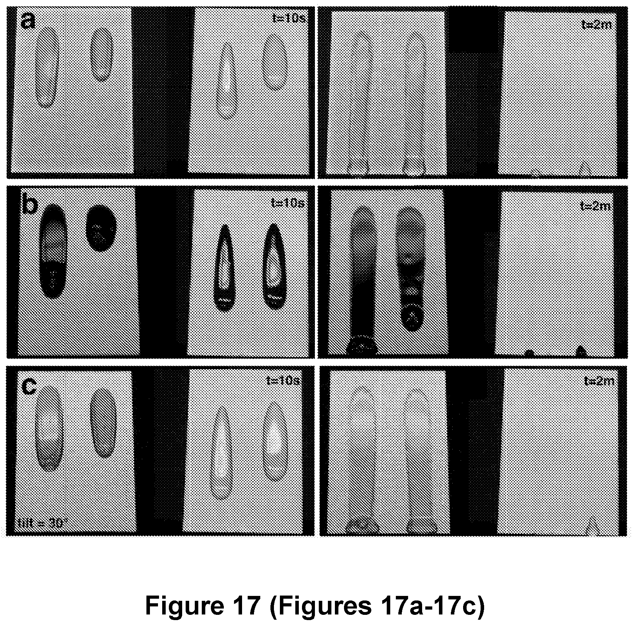

Figure 15, with parts a-c, referred to herein as Figures 17a-15c, present photographs of time lapse images on white HDPE coupons uncoated control (left half of images) and coated with the formulation of Example 1 and lubricated with GPL 100 (right half of images) exposed to commercially available synthetic motor oil and tilted at about 75°, where: (a) depositing material on the surface, t =0 s, (b) additional material added, t = 20 s, and (c) the end result demonstrating the ability to completely repel motor oil in less than 2 minutes.

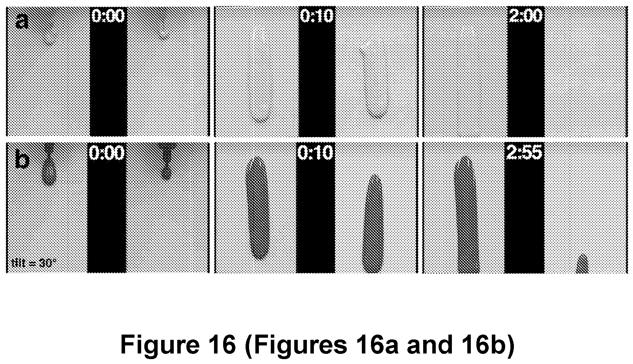

Figure 16, with parts a and b, referred to herein as Figures 16a and 16b, present photographs of time lapse images on grey HDPE coupons uncoated control (left half of images) and coated with the formulation of Example 2 and lubricated with GPL 105 (right half of images) exposed to standard paint colorants (time displayed *m:ss)* and tilted at 30°, where: (a) top row was exposed to yellow paint colorant, and (b) bottom row was exposed to magenta (red) colorant. The figures demonstrate how a surface made with the formation of Example 2 can be entirely evacuated in 2-3 minutes and remain clean.
Figure 17, with parts a-c, referred to herein as Figures 17a-17c are photographs of time lapse images on flat aluminum coupons uncoated control (left half of images) and coated with the formulation of Example 2 lubricated with GPL 105 (right half of images) exposed to 3 different UV curable resins and tilted at 30°, where: (a) top row was exposed to a clear resin, (b) middle row was exposed to a black resin, and (c) bottom row was exposed to a translucent blue resin. The figures demonstrate complete evacuation of the coated surface after approximately 2 minutes unlike the control surface that remains fouled.

### DETAILED DESCRIPTION

It now has been discovered that a substantially uniformly-textured or a uniformly-textured surface formed from a one-pot spray formulation described in the present application, which can be more advantageous than a hierarchically-textured surface for creating a slippery liquid-infused porous surface, can be created in a single application without additional multi-step treatment (e.g. boiling water treatment and surface functionalization) and with better mechanical properties than previously known. That is, a functionalized, roughened surface can be created that is substantially uniformly-textured such that the surface can immobilize a lubricating liquid (lubricant) to form a layer of liquid over and above the surface thereby presenting a smooth liquid interface with minimal, undesirable pinning points. These pinning points lead to a non-flat liquid interface conforming to the topography created by a larger length scale roughness than the nanoscale (e.g. microscale texture, potential protrusion of larger length scale peaks of underlying solids above the liquid surface, incomplete coverage of the lubricant failing to form liquid overlayer around cracks where underlying solids can be exposed acting as pinning points). Such exposed surfaces can act as a 'defect point' where liquid can pin and contribute to increased contact angle hysteresis and as a starting point to dewet the pre-wet lubricant and eventually displace the lubricant. Therefore, it is essential to cover all the solid surfaces with a stable layer of lubricant (i.e. liquid overlayer) and to avoid forming any composite interface where both liquid and solid can present together. Accordingly, the present teachings involve compositions and methods for creating a functionalized, roughened or textured surface that can have feature sizes of a narrow size distribution, which compositions and methods can include a single step application of a composition of the present teachings that can be applied by spraying, dip coating, or any other conventional solvent deposition processes known in the art that are practical for industrial applications.

In a paper by Kim et al. (Co-author Kim is one of the co-inventors herein) entitled, "Hierarchical or Not? Effect of the Length Scale and Hierarchy of the Surface Roughness on Omniphobicity of Lubricant-Infused Substrates," Nano Letters 13:1793-1799 (2013), the performance of slippery liquid-infused coatings were evaluated. In summary, a hierarchically-textured surface when exposed to high shear rates was capable of retaining more lubricant liquid by mass, due to its larger pore size, but the performance of the slippery liquid-infused surface was highly compromised due to large micron-sized features extending out of the lubricant overlayer and the lubricant liquid overlayer being conformal to the microscale texture rather than flat and smooth. On the other hand, a uniformly nano-porous surface per the present teachings exhibited much less lubricant retention by mass, due to its smaller pore size; however, the slippery liquid-infused surface performance was retained because flat and smooth lubricant liquid overlayer was maintained. A pictorial representation of the experiment can be seen in Figures 3a-3f, where the more uniformly-textured surface is superior to the hierarchically-textured surface as a support surface for a slippery liquid-infused porous surface.

Accordingly, the functionalized, roughened surface of the present teachings preferably is not a hierarchically-textured surface but rather a substantially uniformly-textured or a uniformly-textured surface. Such a uniformly-textured surface can be created using nanoparticles having a narrow particle size distribution such as a monodisperse population of nanoparticles. That is, a narrow particle size distribution can be described as monodispersed. By using a dispersion of suspended particles having a narrow particle size distribution, a porous or textured coating or film can be realized that has a smaller variation in its surface topography but maintains sufficient porosity to stably immobilize a lubricant within, on and over the porous coating.

A narrow particle size distribution has a standard deviation of 80% from an average (or mean) particle size of the population of nanoparticles. In various embodiments, the narrow particle size distribution can have a standard deviation of 75% from an average particle size, of 70% from an average particle size, of 60% from an average particle size, of 50% from an average particle size, of 40% from an average particle size, of 30% from an average particle size, of 20% from an average particle size, or less

With respect to creation of a uniformly-textured surface rather than a hierarchically-textured surface, a hierarchically-textured surface typically refers to two different length scale features that form the porosity of the structure on the surface. The difference between the two different length scales should be at least an order of magnitude, i.e., 10¹ or 10 times, different. Accordingly, with this hypothesis as a guide, to avoid creating a hierarchically-textured surface, the ratio of a primary feature size to a secondary feature size of solids in the composition such as nanoparticles can be less than 10, less than 9, less than 8, less than 7, less than 6, less than 5, less than 4, less than 3, or less than 2. A primary feature size can be a particle size at the upper end of the particle size distribution range and a secondary feature size can be a particle size at the lower end of the particle size distribution.

Although under an order of magnitude difference between a primary feature size and a secondary feature size can provide a textured surface of the present teachings, often hierarchical structure features are discussed in terms of micro- and nano-scaled features, which size difference is three orders of magnitude, i.e., 10³ or 1000 times, different. While such a large size difference in a particle size distribution range can create a hierarchically-textured surface, a grey area exists between this size difference and a one order of magnitude size difference. That is, a defined number as to where the cross-over occurs from one textured surface to the other is dependent on many different factors that influence the formation of the textured coating such as the composition of the nanoparticles and the binder, their compatibility with the solvent, the dispersion of the nanoparticles in the composition, the setting and/or curing time from application of the composition to its formation, and so on. Thus, a ratio of a primary size feature to a secondary size feature can be greater than 10 and provide a non-hierarchically-textured coating or surface, i.e., a substantially uniformly-textured coating, film or surface, using compositions and methods of the present teachings.

For example, in certain embodiments, the nanoparticles can form agglomerates when applied to a substrate or surface. Agglomerates of nanoparticles can be present in the compositions if the nanoparticles are not dispersed sufficiently or appropriately, or for other reasons such as the compatibility of the nanoparticles with the binder and/or the solvent. In such cases where agglomerates of nanoparticles are present on the surface, a primary feature size can be the size of the agglomerates (e.g., an average size or a size at the upper end of the agglomerate size distribution range) and a secondary feature size can be the size of the nanoparticles (e.g., an average size or a size at the lower end of the particle size distribution). In such cases, the ratio of a primary feature size to a secondary feature size can be greater than 10, for example, greater than 15, or greater than 20 of greater than 25, and provide a non-hierarchically-textured coating or surface, i.e., a substantially uniformly-textured coating or surface, using compositions and methods of the present teachings.

In these cases, without wishing to be bound to any particular theory, it is believed that because an agglomerate is composed of the nanoparticles in the composition, the surface topography of the agglomerate would be similar to the surface topography created by completely dispersed nanoparticles applied to a surface, although having the curvature of the agglomerate rather than conforming to the topography of the surface. Thus, while the largest size feature (e.g., the diameter of the agglomerate) would be larger than the largest nanoparticle size feature and could extend a greater distance from the underlying substrate or surface, a textured coating or film of the present teachings typically is not a mono-layer of nanoparticles but can contain many "layers" of nanoparticles from the surface of the substrate to the exposed surface of the coating. Consequently, a mixture of nanoparticles and agglomerates within the coating or film can present a substantially uniformly-textured surface similar to a textured surface created without any agglomerates present. Accordingly, the ratio of a primary feature size to a secondary feature size can be greater than 10 and still provide a non-hierarchically-textured surface.

With respect to the stability of the lubricant overlayer, without wishing to be bound to any particular theory, while it is believed that the lubricant overlayer can be stabilized by the chemical affinity between it and the binder, an equal or greater amount of stability can be provided by the textured surface itself. That is, a driving factor stabilizing the lubricant overlayer can be the capillary force created by the functionalized, roughened surface texture, i.e., porosity, of the present teachings.

Another factor in the preparation of the compositions of the present teachings is the particle loading or amount of nanoparticles in the composition. In some embodiments, a strong affinity between the nanoparticles and the binder is desired. In certain embodiments, the affinity between the nanoparticles and the binder is not strong, for example, where the nanoparticles have incompatibility with the binder. Without wishing to be bound to any particular theory, it is believed that where an affinity exists between the nanoparticles and the binder, i.e., they are more compatible, the particle loading can be less or reduced compared to where an incompatibility exists because in the former case, the particles can be dispersed well in the composition while in the latter case, the incompatibility promotes aggregation of the nanoparticles thereby requiring a higher loading of nanoparticles to achieve the textured surfaces of the present teachings.

In practice, a higher loading of particles in a composition including a binder that has incompatibility with the nanoparticles can be useful where mechanical stability of the surface is of lesser importance. In these cases, the resulting coating can be a thicker coating of particles and binder, which coating can provide a desirable surface of the present teachings. Another consideration with respect to compositions having a high particle loading is that less binder will be present in these compositions and consequently, in the resulting surface coating or film. With less binder present, the coating may not be strongly bound to the surface of the substrate and/or can be too porous to provide desired mechanical durability.

In addition, a higher viscosity lubricant can assist in creating a more uniform and/or stable lubricant overlayer. Furthermore, matching the viscosity of the lubricant being used to that of the fouling agent or liquid-to-be-repelled can improve the performance of the slippery liquid-infused porous surface's anti-fouling characteristics. Finally, the formulation can be made such that the solution is low VOC or zero VOC as well as crack-free, for example, by tuning the solvent system of the composition.

Throughout the application, where compositions are described as having, including, or comprising specific components, or where processes are described as having, including, or comprising specific process steps, it is contemplated that compositions of the present teachings also consist essentially of, or consist of, the recited components, and that the processes of the present teachings also consist essentially of, or consist of, the recited process steps.

In the application, where an element or component is said to be included in and/or selected from a list of recited elements or components, it should be understood that the element or component can be any one of the recited elements or components, or the element or component can be selected from a group consisting of two or more of the recited elements or components.

It should be understood that the expression "at least one of" includes individually each of the recited objects after the expression and the various combinations of two or more of the recited objects unless otherwise understood from the context and use. The expression "and/or" in connection with three or more recited objects should be understood to have the same meaning unless otherwise understood from the context.

The use of the term "include," "includes," "including," "have," "has," "having," "contain," "contains," or "containing," including grammatical equivalents thereof, should be understood generally as open-ended and non-limiting, for example, not excluding additional unrecited elements or steps, unless otherwise specifically stated or understood from the context.

The use of the singular herein, for example, "a," "an," and "the," includes the plural (and vice versa) unless specifically stated otherwise.

Where a percentage is provided with respect to an amount of a component or material in a structure or a composition, the percentage should be understood to be a percentage based on weight, unless otherwise stated or understood from the context.

Where a molecular weight is provided and not an absolute value, for example, of a polymer, then the molecular weight should be understood to be an average molecule weight, unless otherwise stated or understood from the context.

It should be understood that the order of steps or order for performing certain actions is immaterial so long as the present teachings remain operable. Moreover, two or more steps or actions may be conducted simultaneously.

At various places in the present specification, numerical values are disclosed in groups or in ranges. It is specifically intended that the description include each and every individual subcombination of the members of such groups and ranges and any combination of the various endpoints of such groups or ranges.

The use of any and all examples, or exemplary language herein, for example, "such as" or "including," is intended merely to illustrate better the present teachings and does not pose a limitation on the scope of the invention unless claimed. No language in the specification should be construed as indicating any non-claimed element as essential to the practice of the present teachings.

A one-pot sprayable composition of the present disclosure can include a suspension in which disaggregated nanoparticles (e.g., average particle size of 100 nm-120 nm in diameter) are dispersed in a carrier solvent, a base matrix resin (also referred to as a "binder") dissolved in or emulsified within the solvent, where catalysts, additives, and additional carrier solvents can be present. A goal is to create a primarily nano-porous surface containing either a uniformly nano-textured surface, which can include a hierarchically-textured surface having features much less pronounced than standard superhydrophobic coatings such that no pinning points are capable of protruding out of the lubricant-infused overlayer.

Examples of nanoparticles that can be useful in the present teachings include Zonyl^{™} MP1000 PTFE particles (Dupont), Zonyl^{™} MP1100, MP1200, MP1300, MP1400, MP1400F, MP1600 PTFE particles (Dupont), Ultraflon^{™} MP-55 PTFE particles (Laurel Products), Polyflon^{™} F-series PTFE particles (Daikin), Algoflon^{®} L100 PTFE particles (Solvay), Aerosil^{®} R200, R202, R812, R812S, or R8200, R9200 (Evonik Industries), Enova^{®} IC3100, Lumira^{®} LA100 (Cabot Corporation), amorphous silicon dioxide hexamethyldisilazane treated (Gelest Inc.), aerogel fine particles (Dow Coming Corporation), fumed silica (Sigma Aldrich Co. LLC), HDS2, HDS3, S125M, S20M (Nyacol Nano Technologies, Inc.), HDK H15 and HDK H20 (Wacker Chemie AG).

Examples of base matrix resins, or base resins, or binders that can be useful in the present teachings include a fluorinated binder, for example, a fluorinated polyurethane such as Lumiflon LF200F and/or Lumiflon LF916F (AGC Chemicals), Capstone^{®} ST-110 (Dupont), Fluonate K-702, K-704 (DIC Corporation).

Examples of solvents that can be useful in the present teachings include water, ethyl acetate, methyl ethyl ketone, methyl isobutyl ketone, acetone, parachlorobenzotrifluoride (e.g, Oxsol-100, Rust-Oleum), decafluoropentane (eg. Vertrel^{®} XF), methoxy-nonafluorobutane (eg. 3M^{™} Novec^{™} 7100 Engineering Fluid), mineral spirits, alcohols, glycol ethers, petroleum distillates, n-tert butyl acetate , and mixtures thereof, with the proviso that the binder is soluble in the solvent.

To ensure the coatings present the proper porosity optimized for stabilizing the lubricious overlayer, the composition or formulation should contain only one size of nanoparticles, for example, a monodisperse population of nanoparticles, where the nanoparticles are disaggregated prior to being introduced into the base matrix. The processing methods include traditional mixing and homogenization processing methods and tools such as horn or probe sonication, standard ultrasonic bath treatment, ball milling, jar milling, sand milling, rotorstator, cavitation mixer, blender, overhead mixer, and/or jet milling. In the event that the nanoparticles are not properly disaggregated, the nanoparticles can remain clumped together, causing the resulting coating to be hierarchically-textured with excessively large features, which surface can be desirable for superhydrophobic surfaces but not for pinning point-free slippery liquid-infused porous surfaces.

Determining the proper ratio of the nanoparticles and the binder can also play an important role in providing the porosity and the chemical affinity for stabilizing a lubricant overlayer. A goal is to spray a one-pot formulation that cures or sets in such a way as to allow the particles to be exposed at the surface but not so much so that the binder is incapable of holding them in place (see Figure 4 comparing sub-Figure 4a, 4b, 4c). This is important for creating a system that is both mechanically robust while still presenting the proper texturing required for stabilizing a uniform lubricant overlayer (see Figure 5 with optimum at sub-Figure 3c). The exact particle loading is dependent on the compatibility between the binder and the particles being used and can vary for any given system. Additionally, since the particles are exposed at the surface it is possible to tune the chemistry of the particles such that a greater affinity between the surface and the lubricant exists, helping further stabilize the lubricant overlayer. For example, if the lubricant is fluorinated, using a fluorinated particle can increase the lubricant stability compared to use of a non-fluorinated particle.

Another ingredient or component of the (spray-on) formulation is the solvent or solvent system. A primary consideration when selecting a solvent (system) is compatibility. The solvent (system) must be compatible with the binder while also providing stability for the particle dispersion. Should the solvent (system) be incompatible with the particles or the binder then this leaves the possibility for the particles to re-aggregate or the binder to phase separate out of solution, resulting in an inhomogeneous mixture incapable of producing the proper texturing. A secondary consideration when selecting a solvent (system) is evaporation rate. By tuning the drying profile, the coating or film can set properly, not only exposing the nanoparticles but also improving the mechanical durability of the coating. An uncontrolled drying process can lead to the formation of cracks, simultaneously decreasing the mechanical durability of the film and compromising the uniform texturing required to maintain a stable lubricant overlayer. Accordingly, overall coating quality and functionality can rely on a properly tuned solvent system.

Because an end goal of the present teachings can be a non-stick, repellant, or slippery surface, it is important to consider the material being repelled when selecting a binder or surface modifier. For example, if the coating is composed of an alkyd binder and the material to be repelled has an affinity for alkyd, then under the right conditions the fouling agent can displace the lubricant and directly contact the surface resulting in permanent adhesion. Depending on the material being repelled, the binder should be selected to minimize affinities between itself and the fouling agent, promoting a continuous lubricant interface that can prevent permanent adhesion. Alternatively, the surface chemistry of the binder can be adjusted by means of a surface modifier. Returning to the previous example, instead of replacing the alkyd binder entirely, an additive can be included in small amounts such that the additive can self-stratify to the surface, cross link into the binder network and present a new interface with reduced chemical affinity between the binder and fouling agent. This allows the possibility to tune the chemical affinities between the binder and the fouling agent without needing to change the bulk binder. Adjusting the chemical affinities in the system is important to prevent the permanent adhesion of the fouling agent onto the coating.

Examples of lubricating liquids or lubricants that can be useful in the present teachings include trifluoromethyl C₁₋₄ alkyl dimethicone; polydimethylsiloxanes, trimethylsiloxy terminated; silanols such as silanol terminated polydimethylsiloxanes; silanol terminated diphenylsiloxane - dimethylsiloxane copolymers; silanol terminated, polydiphenylsiloxane; silanol terminated polytrifluoropropylmethylsiloxane; carbinol (hydroxyl) terminated polydimethylsiloxanes containing hydroxypropyleneoxypropyl or hydroxyethyleneoxypropyl segments; (carbinol functional)methylsiloxane-dimethylsiloxane copolymers containing hydroxypropyleneoxypropyl or hydroxyethyleneoxypropyl segments; and monocarbinol terminated polydimethylsiloxanes; aromatic silicones such as diphenylsiloxanedimethylsiloxane copolymers, phenylmethylsiloxane-dimethylsiloxane copolymers, and phenylmethylsiloxane homopolymers; organic silicones such as alkylmethylsiloxane homopolymer; alkylmethylsiloxane - arylalkylmethylsiloxane copolymer; alkylmethylsiloxane dimethylsiloxane copolymer; polydiethylsiloxanes, triethylsiloxy terminated; phenyl trimethicone; caprylyl methicone; and dodecylmethylsiloxane-2-phenylpropylmethylsiloxane copolymer; fluoro-silicones such as poly trifluoropropylmethylsiloxane and fluoropropylmethylsiloxane dimethylsiloxane copolymer; hydrophilic silicones such as (hydroxyalkyl functional) methylsiloxane-dimethylsiloxane copolymers and dodecylmethylsiloxanehydroxypolyalkyleneoxypropylmethylsiloxane, copolymer; and hydrocarbon-based oils or hydrocarbon oils such as saturated hydrocarbon oils, cycloalkanes, unsaturated hydrocarbon oils, branched hydrocarbon oils, aromatic hydrocarbon oils such as naphthalene oil, poly(alphalefins), paraffin oil, petroleum or mineral oil, white mineral oil, isoparaffins (Isopar^{™}), and natural or modified biohydrocarbon oils such as vegetable oil, tocopherol, lanolin, and pyrolysis oil.

While the present invention enhances operational service life of an article with a lubricious liquid surface with an overlayer, such overlayer may not be necessarily permanent. If and when the lubricious liquid is depleted, the liquid can be restored from an external source applied directly on the textured surface. In another embodiment, the depleted liquid can be restored from a reservoir via external conduits or conduits within the article connecting to the reservoir of liquid.

By considering and combining the above-described features, a one-pot composition or formulation can be prepared that can provide a porous textured coating, which can stabilize a lubricating liquid overlayer. By tuning the base resin (binder), the nanoparticles and the lubricant, it can be possible to repel virtually any fluid based on any specific application.

Accordingly, the present teachings involve a composition for creating a functionalized, roughened surface in a single application. The composition includes a solvent; nanoparticles having a narrow particle size distribution range, where the nanoparticles are dispersed in the solvent; a binder (base resin), where the binder is soluble in the solvent; and an additive with less than 5 wt.% of the total solids in the composition, where the additive can improve the processing of the composition and/or impart additional functions such as leveling, anti-sagging, defoaming, enhanced matching of surface chemistry to the lubricant, fluorescence, and fragrance. The composition can provide a uniformly-textured surface suitable for forming a smooth liquid lubricant overlayer surface or slippery liquid-infused porous surface.

The nanoparticles include a fluoropolymer. In some embodiments, the nanoparticles include surface modified nanoparticles to present desired surface chemistry. In some embodiments, the nanoparticles may not be in a spherical shape but can be a non-spherical shape such as oval, rice-like, fiber-like, plate-like, or other two dimensional or three dimensional shapes. In such cases, the particle size dimensions, for example, for determining an average particle size, can be measured and be considered to be along the longest dimension of a particle. In some embodiments, the nanoparticles can be described as monodisperse, for example, having a narrow particle size distribution range.

An average particle size of the nanoparticles can be between 20 nm to 1000 nm. For example, the average particle size of the nanoparticles can be about 20 nm, 50 nm, about 75 nm, about 100 nm, about 120 nm, about 150 nm, about 175 nm, about 200 nm, about 250 nm, about 300 nm, about 350 nm, about 400 nm, about 450 nm, about 500 nm, about 600 nm, about 700 nm, about 800 nm, about 900 nm, or about 1000 nm. In certain embodiments, the nanoparticles can have a size feature such as a diameter between 50 nm to 120 nm, from 120 nm to 500 nm, or from 500 nm to 1000 nm.

The binder includes a fluorinated compound. Therefore, the binder includes a fluorinated compound and the nanoparticles include a fluoropolymer. In some embodiments, the lubricant advantageously can include a fluorinated compound too. In some embodiments, the binder or one of the components of the binder system can be pre-treated to have increased fluorinated character.

The solids of the composition include between 10 volume % to 75 volume % nanoparticles. The solids of the composition can include between 10 volume % to 65 volume % nanoparticles, between 10 volume % to 55 volume % nanoparticles, between 10 volume % to 45 volume % nanoparticles, between 10 volume % to 35 volume % nanoparticles, between 10 volume % to 20 volume % nanoparticles, between 20 volume % to 75 volume % nanoparticles, between 20 volume % to 65 volume % nanoparticles, between 20 volume % to 55 volume % nanoparticles, between 20 volume % to 35 volume % nanoparticles, between 20 volume % to 30 volume % nanoparticles, between 30 volume % to 75 volume % nanoparticles, between 30 volume % to 65 volume % nanoparticles, between 30 volume % to 55 volume % nanoparticles, between 30 volume % to 50 volume % nanoparticles, between 50 volume % to 75 volume % nanoparticles, between 50 volume % to 65 volume % nanoparticles, between 50 volume % to 60 volume % nanoparticles, between 60 volume % to 75 volume % nanoparticles, between 60 volume % to 70 volume % nanoparticles, or between 65 volume % to 75 volume % nanoparticles.

The composition can further include one or more additives such as a surfactant, a film-forming agent, a pH adjustor, a colorant, a pigment, a suspending agent, a dispersant, a wetting agent, a defoaming agent, an anti-oxidant, a UV-absorber or UV-stabilizer, a leveling agent, a stabilizing agent, a chemical modifier, and a catalyst. In some embodiments, an additive can be used to further increase desired surface character (e.g. fluorinated character).

The composition can use no volatile organic compound (VOC), or can be a low or ultra-low VOC composition.

The method of creating a functionalized, roughened surface includes dispersing the nanoparticles having a narrow particle size distribution in the solvent including the binder to form a roughening composition; applying the roughening composition to a surface; and removing the solvent from the roughening composition on the surface to form a coating including a functionalized, roughened surface.

In the methods of the present teachings, dispersing nanoparticles can include sonicating nanoparticles in the solvent. The methods can include applying the roughening composition by one or more of spraying, brush painting, roller painting, dip coating, and spin coating the roughening composition. The methods can include removing the solvent from the roughening composition on the surface, for example, by evaporating the solvent. Removing the solvent from the roughening composition on the surface can include controlling the rate of removal of the solvent to provide a crack-free functionalized, roughened surface. Controlling the rate of removal of the solvent can include at least one of altering the solvent blend, altering the evaporation temperature, and altering the evaporation humidity.

The present teachings provide a method of creating a repellant surface. The method includes forming a functionalized, roughened surface according to the present teachings; and applying a lubricating liquid to the functionalized, roughened surface. The lubricating liquid has a chemical affinity for the functionalized, roughened surface such that, at atmospheric pressure, the lubricating liquid is substantially immobilized in, on and over the functionalized, roughened surface, without dewetting from the substrate, to form a repellant surface.

The methods can include applying a lubricating liquid by applying the lubricating liquid in a solvent. The repellant surface can be a smooth liquid surface of the lubricating liquid over and above the functionalized, roughened surface. In particular methods, the lubricating liquid can have a chemical affinity for the nanoparticles and/or the binder. In certain methods, the chemical affinity of the functionalized, roughened surface for the lubricating liquid can be greater than the chemical affinity of the functionalized, roughened surface for a foreign material to be repelled by the repellant surface. In some embodiments, the viscosity ratio of the lubricating liquid to that of a foreign material to be repelled by the repellant surface is close to 1, 1 +/- 0.25, or 1 +/- 0.5. In various methods, the lubricating liquid is immiscible with a foreign material to be repelled by the repellant surface. The methods of the present teachings can further include delivering additional lubricating liquid to the repellant surface.

The following examples are provided to illustrate further and to facilitate the understanding of the present teachings and are not in any way intended to limit the invention.

### Example 1 (Comparative)

A formulation utilizing an alkyd binder as the base matrix (binder) was combined with polytetrafluoroethylene (PTFE) particles. Specifically, Algoflon^{®} L100 PTFE (Solvay) particles with diameter of 100 nm-120 nm were disaggregated in acetone at 20 wt. %. An additive, Viton^{™} was added at 1 wt. % to the suspension to further impart fluorinated surface chemistry. Disaggregation was achieved by processing the solution with a horn sonicator, Q700 (Qsonica, LLC.) with a probe diameter as recommended by the manufacturer for the given solution volume. The volume varied from 10 mL to 1.5 L depending on the batch size and probe diameter. The solution was sonicated with 5 seconds bursts at 100% amplitude for a total processing time of 40 seconds, or until the nanoparticles were fully suspended (confirmed via solution viscosity). Separately, alkyd binder 200-60V (Deltech Corporation) was diluted using parachlorobenzotrifluoride (Oxsol-100, Rust-Oleum) to a solid content of 20 wt.%. Both parts were combined at 4 parts particle suspension to 3 parts alkyd solution. Once combined, the solution was further sonicated with the previously described settings for an additional 30 seconds to mix both components. The final step consisted of further diluting the solution with both acetone and Oxsol-100 to thin the solution for spraying. The total drying time was controlled based on the quantity of Oxsol-100 added at the end. The solution was then sprayed onto a substrate and allowed a sufficient amount of time to dry.

### Example 2

Following the same protocol as in Example 1, the formulation of this example used a fluorinated binder. By replacing the alkyd binder 200-60V with Lumiflon LF200F or Lumiflon LF916F fluorinated binders (AGC Chemicals), a similarly textured surface was produced using Algoflon L100 PTFE particles but at a mixing ratio of 2:1.

### Example 3 (Comparative)

Following the same protocol as in Example 1, the formulation of this example used an alkyd binder with hydrophobic silica particles. The nanoparticle suspension was achieved using the same processing method but with a silica particle loading of 4 wt. % instead of 20 wt. %. The silica particles were Aerosil^{®} R8200 (Evonik Industries). Otherwise the formulation remained unchanged.

### Example 4 (Comparative)

Algoflon^{®} L100 PTFE particles were combined with Versamid^{®} Pur 1010 (BASF) as a binder. The formulation contained 3 parts Versamid^{®} Pur 1010 to 7 parts Algoflon^{®} L100 dispersed in ethyl acetate and Oxsol^{®} 100 to improve processing time and dilute the system for spraying. All components were processed together using a method similar to that of Example 1. Once sprayed, the formulation provided a similar texture as with the formulations of Examples 1-3 but by changing the binder to Versamid^{®} Pur 1010, which is a thermoplastic polyurethane, the formulation no longer required curing and sets nearly instantly.

To demonstrate the surfaces of the present teachings as prepared in Example 2 pictures are provided. To properly demonstrate that the surface is advantageous for creating a slippery liquid-infused porous surface, some of the experiments conducted by Kim et al. in the Nano Letters paper were recreated using formulations of the present teachings.

Glass slides were sprayed with the formulation of Example 2, Fluorothane^{™} WX2100 (Cytonix Corporation) and NeverWet^{®} (Ross Technology Corporation) and then lubricated with Krytox^{®} perfluoropolyether (PFPE) oil GPL 105 (Dupont). The samples were then subjected to increasing shear rates on a spin coater, where at each iteration, the mass loss of lubricant was recorded. Figure 7 demonstrates how the overall mass of GPL 105 remaining on the surface is much less for the formulation of Example 2. This result is an indication that the formulation of Example 2 has a lower average pore size than both commercially available sprays.

After spinning the samples at 10,000 rpm, the performance of the slippery liquid-infused porous surfaces was evaluated to confirm the presence of a lubricious overlayer. Accordingly, the slides were tilted at an angle of 60°, where the shedding speed of 10 µL droplets of water (surface tension = 71.97 mN/m) and of ethanol (surface tension = 22.27 mN/m) was measured to evaluate the slippery properties of both high and low surface tension liquids. Figure 8 demonstrates that after spinning at 10,000 rpm, the formulation of Example 2 still possessed a greater degree of slippery properties than both Fluorothane^{™} WX2100 and NeverWet^{®} even with 1/7^{th} of the lubricant mass. Thus, the surface was both nano-porous and capable of stabilizing a lubricious overlayer as desired.

In addition to benchmarking the surfaces of the present teachings versus commercially available products that produce roughened surfaces, a similar approach was used to characterize the surface and adjust the particle loading so as to enhance slippery liquid-infused porous surface performance. With reference to Figure 5, including sub-Figures 5a-5d, the formulation of Comparative Example 4 was altered such that there existed over-loaded and under-loaded coatings to demonstrate the effects of particle loading on slippery liquid-infused porous surface performance. The samples were lubricated with Krytox GLP 105 (Dupont) and sheared at 10,000 rpm to deplete the surface. Once depleted, the surfaces were characterized by measuring the speed of a 10 µL ethanol droplet sliding along the surface (see Figure 9). Sub-Figures 5a and 5b show under loading 5c illustrates optimum and 5d shows over loading with Figure 9 showing ethanol droplet speed vs. particle loading. See the initial descriptions of Figure 5 and Figure 9 in the above description of the Drawings section.

Further confirmation of the surface's structure was made by measuring the contact angle of water on the surface and by directly imaging the surface using a scanning electron microscope (Figure 10).

Figures 11-17, and their respective descriptions in the above description of the Drawings section, show and describe additional comparative examples.

The foregoing embodiments are to be considered in all respects illustrative rather than limiting on the present teachings described herein. Scope of the present invention is thus indicated by the appended claims rather than by the foregoing description.

## Claims

1. A method of creating a repellant surface, the method comprising:
forming a functionalized, roughened surface on a substrate surface by:
dispersing fluoropolymer nanoparticles in a solvent comprising a fluorinated binder to form a roughening composition;
applying the roughening composition to a substrate surface; and
removing the solvent from the roughening composition on the surface to form a coating comprising a non-hierarchical functionalized, roughened surface;
wherein the fluoropolymer nanoparticles have a narrow particle size distribution **characterized by** a standard deviation of 80% or less from the mean particle size of the nanoparticles;
wherein the fluorinated binder is soluble in the solvent;
wherein the solids of the composition comprise between 10 volume % to 75 volume % nanoparticles; and
wherein the coating comprises one or more layers of the fluoropolymer nanoparticles dispersed therein and having fluoropolymer particles exposed at the surface of the coating; and
applying a lubricating liquid to the functionalized, roughened surface, wherein the lubricating liquid, at atmospheric pressure, is immobilized in, on and over the functionalized, roughened surface, without dewetting from the substrate, to form a repellant surface.

2. The method of claim 1, wherein applying a lubricating liquid comprises applying the lubricating liquid in a solvent.

3. The method of claim 1, wherein the repellant surface is a smooth liquid surface of the lubricating liquid over and above the functionalized, roughened surface.

4. The method of claim 1, wherein the lubricating liquid has a chemical affinity for the nanoparticles and/or binder.

5. The method of claim 1, wherein the chemical affinity of the functionalized, roughened surface for the lubricating liquid is greater than the chemical affinity of the functionalized, roughened surface for a foreign material to be repelled by the repellant surface.

6. The method of claim 1, wherein the fluoropolymer nanoparticles are monodisperse.

7. The method of claim 1, wherein the fluoropolymer nanoparticles have a primary particle size distribution having a standard deviation of 50% or less from the mean particle size.

8. The method of claim 1, wherein the median particle size of the nanoparticles is between 20 nm to 750 nm.

9. The method of claim 1, wherein the solids of the roughening composition comprise between 10 volume % to 35 volume % nanoparticles.

10. The method of claim 1, wherein the roughening composition further comprises one or more of an additive comprising a surfactant, a film-forming agent, a pH adjustor, a colorant, a pigment, a suspending agent, a dispersant, a wetting agent, a defoaming agent, an anti-oxidant, a UV-absorber or UV-stabilizer, a leveling agent, a stabilizing agent, a chemical modifier, and a catalyst.

11. The method of claim 1, wherein the fluorinated binder comprises a fluorinated polyurethane.

12. The method of claim 1, wherein the solvent comprises a solvent selected from parachlorobenzotrifluoride, decafluoropentane, methoxy-nonafluorobutane, and mixtures thereof.

13. The method of claim 1, wherein the fluoropolymer nanoparticle comprises a polytetrafluoroethylene (PTFE).

14. An article of manufacture comprising a roughed surface made by the method of claim 1.

15. The article of claim 14, wherein the lubricant is adhered to the surface texture and including an overlayer stably maintained, the binder and nanoparticles having a higher affinity with the lubricant than with foreign material to be repelled by the lubricant.

## Patentansprüche

1. Verfahren zur Herstellung einer abweisenden Oberfläche, wobei das Verfahren umfasst:
Bilden einer funktionalisierten aufgerauten Oberfläche auf einer Substratoberfläche durch:
Dispergieren von Fluorpolymer-Nanopartikeln in einem Lösungsmittel, das ein fluoriertes Bindemittel umfasst, um eine aufrauende Zusammensetzung zu bilden;
Aufbringen der aufrauenden Zusammensetzung auf eine Substratoberfläche; und
Entfernen des Lösungsmittels aus der aufrauenden Zusammensetzung auf der Oberfläche, um eine Beschichtung zu bilden, die eine nicht-hierarchisch funktionalisierte, aufgeraute Oberfläche umfasst;
wobei die Fluorpolymer-Nanopartikel eine schmale Partikelgrößenverteilung aufweisen, die durch eine Standardabweichung von 80 % oder weniger von der mittleren Partikelgröße der Nanopartikel gekennzeichnet ist;
wobei das fluorierte Bindemittel in dem Lösungsmittel löslich ist;
wobei die Feststoffe der Zusammensetzung zwischen 10 Vol.-% und 75 Vol.-% Nanopartikel umfassen; und
wobei die Beschichtung eine oder mehrere Schichten der Fluorpolymer-Nanopartikel darin dispergiert umfasst und Fluorpolymer-Nanopartikel an der Oberfläche der Beschichtung freiliegend aufweist; und
Aufbringen einer Schmierflüssigkeit auf die funktionalisierte aufgeraute Oberfläche, wobei die Schmierflüssigkeit bei Atmosphärendruck in, auf und über der funktionalisierten aufgerauten Oberfläche immobilisiert ist, ohne von dem Substrat zu entnetzen, um eine abweisende Oberfläche zu bilden.

2. Verfahren gemäß Anspruch 1, wobei Aufbringen einer Schmierflüssigkeit Aufbringen der Schmierflüssigkeit in einem Lösungsmittel umfasst.

3. Verfahren gemäß Anspruch 1, wobei die abweisende Oberfläche eine glatte Flüssigkeitsoberfläche der Schmierflüssigkeit auf und über der funktionalisierten aufgerauten Oberfläche ist.

4. Verfahren gemäß Anspruch 1, wobei die Schmierflüssigkeit eine chemische Affinität für die Nanopartikel und/oder das Bindemittel aufweist.

5. Verfahren gemäß Anspruch 1, wobei die chemische Affinität der funktionalisierten aufgerauten Oberfläche für die Schmierflüssigkeit höher ist als die chemische Affinität der funktionalisierten aufgerauten Oberfläche für ein Fremdmaterial, das von der abweisenden Oberfläche abgewiesen werden soll.

6. Verfahren gemäß Anspruch 1, wobei die Fluorpolymer-Nanopartikel monodispers sind.

7. Verfahren gemäß Anspruch 1, wobei die Fluorpolymer-Nanopartikel eine Primärpartikelgrößenverteilung mit einer Standardabweichung von 50 % oder weniger von der mittleren Partikelgröße aufweisen.

8. Verfahren gemäß Anspruch 1, wobei die mediane Partikelgröße der Nanopartikel zwischen 20 nm und 750 nm beträgt.

9. Verfahren gemäß Anspruch 1, wobei die Feststoffe der aufrauenden Zusammensetzung zwischen 10 Vol.-% und 35 Vol.-% Nanopartikel umfassen.

10. Verfahren gemäß Anspruch 1, wobei die aufrauende Zusammensetzung ferner einen oder mehrere Zusatzstoffe umfassend ein Tensid, einen Filmbildner, einen pH-Regulator, ein Farbmittel, ein Pigment, ein Suspendiermittel, ein Dispergiermittel, ein Netzmittel, einen Entschäumer, ein Antioxidationsmittel, einen UV-Absorber oder UV-Stabilisator, ein Verlaufmittel, einen Stabilisator, einen chemischen Modifikator und einen Katalysator umfasst.

11. Verfahren gemäß Anspruch 1, wobei das fluorierte Bindemittel ein fluoriertes Polyurethan umfasst.

12. Verfahren gemäß Anspruch 1, wobei das Lösungsmittel ein Lösungsmittel ausgewählt aus Parachlorbenzotrifluorid, Decafluorpentan, Methoxynonafluorbutan und Gemischen davon umfasst.

13. Verfahren gemäß Anspruch 1, wobei das Fluorpolymer-Nanopartikel ein Polytetrafluorethylen (PTFE) umfasst.

14. Fertigungsgegenstand, umfassend eine aufgeraute Oberfläche, die durch das Verfahren gemäß Anspruch 1 hergestellt ist.

15. Gegenstand gemäß Anspruch 14, wobei das Schmiermittel an der Oberflächentextur haftet und eine stabil gehaltene Oberschicht aufweist, wobei das Bindemittel und die Nanopartikel eine höhere Affinität zu dem Schmiermittel als zu Fremdmaterial, das von dem Schmiermittel abgewiesen werden soll, aufweist.

## Revendications

1. Procédé de création d'une surface répulsive, le procédé comprenant :
la formation d'une surface fonctionnalisée, rugosifiée sur une surface d'un substrat par :
dispersion de nanoparticules de fluoropolymère dans un solvant comprenant un liant fluoré pour former une composition de rugosification ;
application de la composition de rugosification sur une surface d'un substrat ; et
élimination du solvant de la composition de rugosification sur la surface pour former un revêtement comprenant une surface rugosifiée, fonctionnalisée non hiérarchique ;
les nanoparticules de fluoropolymère ayant une distribution étroite de tailles de particules **caractérisée par** un écart type de 80 % ou moins par rapport à la taille moyenne de particule des nanoparticules ;
le liant fluoré étant soluble dans le solvant ;
les solides de la composition comprenant entre 10 % en volume et 75 % de nanoparticules ;
le revêtement comprenant une ou plusieurs couches des nanoparticules de fluoropolymère dispersées dans celui-ci et ayant des particules de fluoropolymère exposées à la surface du revêtement ; et
application d'un liquide lubrifiant sur la surface rugosifiée, fonctionnalisée, le liquide lubrifiant, à pression atmosphérique, étant immobilisé dans, sur et au-dessus de la surface rugosifiée, fonctionnalisée, sans démouillage du substrat, pour former une surface répulsive.

2. Procédé selon la revendication 1, l'application d'un liquide lubrifiant comprenant l'application du liquide lubrifiant dans un solvant.

3. Procédé selon la revendication 1, la surface répulsive étant une surface liquide lisse du liquide lubrifiant sur et au-dessus de la surface rugosifiée, fonctionnalisée.

4. Procédé selon la revendication 1, ledit lubrifiant ayant une affinité chimique pour les nanoparticules et/ou le liant.

5. Procédé selon la revendication 1, l'affinité chimique de la surface rugosifiée, fonctionnalisée pour le liquide lubrifiant étant supérieure à l'affinité chimique de la surface rugosifiée, fonctionnalisée pour une matière étrangère devant être repoussée par la surface répulsive.

6. Procédé selon la revendication 1, les nanoparticules de fluoropolymère étant monodispersées.

7. Procédé selon la revendication 1, les nanoparticules de fluoropolymère ayant une distribution de tailles de particules primaires ayant un écart type de 50 % ou moins par rapport à la taille moyenne de particule.

8. Procédé selon la revendication 1, la taille médiane de particule des nanoparticules étant comprise entre 20 nm et 750 nm.

9. Procédé selon la revendication 1, les solides de la composition de rugosification comprenant entre 10 % en volume et 35 % en volume de nanoparticules.

10. Procédé selon la revendication 1, la composition de rugosification comprenant en outre l'un ou plusieurs parmi un additif comprenant un tensioactif, un agent filmogène, un agent d'ajustement du pH, une matière colorante, un pigment, un agent de suspension, un dispersant, un agent mouillant, un agent antimousse, un antioxydant, un absorbant UV ou un stabilisant UV, un agent nivelant, un agent stabilisant, un agent de modification chimique, et un catalyseur.

11. Procédé selon la revendication 1, le liant fluoré comprenant un polyuréthane fluoré.

12. Procédé selon la revendication 1, le solvant comprenant un solvant choisi parmi le parachlorobenzotrifluoride, le décafluoropentane, le méthoxy-nonafluorobutane, et des mélanges correspondants.

13. Procédé selon la revendication 1, la nanoparticule de fluoropolymère comprenant un polytétrafluoroéthylène (PTFE).

14. Article de fabrication comprenant une surface rugosifiée préparée par le procédé selon la revendication 1.

15. Article selon la revendication 14, le lubrifiant étant adhéré à la texture de surface et comprenant une surcouche maintenue de manière stable, le liant et les nanoparticules ayant une affinité supérieure pour le lubrifiant que pour une matière étrangère devant être repoussée par le lubrifiant.
